# EUROPEAN PATENT SPECIFICATION

(11) **EP 0 370 189 B1**
(45) Date of publication and mention of the grant of the patent: **01.03.1995**
(21) Application number: 89116875.9
(22) Date of filing: 12.09.1989
(51) Int. Cl.: G06F 11/20, G06F 15/80

(54) **Modular computer system**
Modulares Rechnersystem
Système à calculateur modulaire

(30) Priority: 20.09.1988 JP 235783/88
(43) Date of publication of application: 30.05.1990
(73) Proprietor: HITACHI, LTD., Chiyoda-ku, Tokyo 101 (JP); HITACHI CONTROL SYSTEMS INC., Hitachi-shi Ibaragi (JP)
(72) Inventor: Suzuki, Yasuo, Ebina-shi Kanagawa (JP); Mori, Kinji, Yokohama-shi Kanagawa (JP); Ogura, Hiroyuki, Yokohama-shi Kanagawa (JP); Teranishi, Yuko, Koganei-shi Tokyo (JP); Matsuura, Masayoshi, Hitachi-shi Ibaragi (JP); Yamanaka, Akito, Akashi-shi Hyogo (JP); Wada, Shinobu, Kawasaki-shi Kanagawa (JP); Orimo, Masayuki, Kawasaki-shi Kanagawa (JP); Kawano, Katsumi, Kawasaki-shi Kanagawa (JP)
(74) Representative: Strehl Schübel-Hopf Groening & Partner

(56) References cited:
- EP-A- 0 184 657
- US-A- 3 609 711
- US-A- 4 063 083
- US-A- 4 354 217
- US-A- 4 659 942
- THE 10TH INT. SYMPOSIUM ON FAULT-TOLERANT COMPUTING, Kyoto, 1st-3rd October 1980, pages 369-371, IEEE, New York, US; DUENPING TSAY et al.: "Design of a reconfigurable front-end processor for computer networks"
- ELECTRONIC DESIGN, vol. 18, no. 24, 22nd November 1970, pages 27-28, Hasbrouck Heights, New Jersey, US; M. LOWENSTEIN: "The mini-est computer is a house of cards"

## Description

The present invention relates to a computer system, and more particularly to a computer system in which the architecture of the system comprises a plurality of computer constituent units, where the computer constituent units include a memory, a processor, an input/output interface circuit, a power source and the like. The architecture of the system also includes signal connections among the constituent units and a power distribution portion for the constituent units which are switched according to the operating state of the computer.

In general, a computer system is constructed of the elemental devices such as a memory, a central processing unit (CPU), an input/output interface (I/O), etc.; bus lines for transferring signals among the elemental devices; a power source; and power feed lines for supplying electric power to the elemental devices. Because of the progress of LSI manufacturing technology, miniaturization of these elemental devices has been realized, and attempts have been made to construct a computer system on a single wafer.

In such computer systems employing LSI technology, an integrated circuit includes internal wiring which is formed for every single elemental device such as a memory or the like and the wiring laid between the different elemental devices is fixed wiring which utilizes pins. An example is discussed in "Future Trends in Wafer Scale Integration" by Carlson, R. 0. et al., Proceedings of the IEEE, Vol. 74, No. 12, pp. 1741-1752, Dec. 1986. Therefore, in a case where an elemental device fails and requires replacement or where the function of any elemental device is to be altered, all other elemental devices are subject to disposal where maintenance, exchange, or renewal is required.

With a computer system which is subject to the replacement, maintenance, or addition of new functions in elemental device units as stated above, increased amounts of labor and time are required for signal and power wiring where the wiring is laid among the elemental devices, and also the layout of the wiring becomes increasingly complicated. These problems arise in spite of the reduced size and reduced costs of the elemental devices.

The 10th Int. Symposium on Fault-Tolerant Computing, Kyoto, October 1980, pages 369-371, IEEE, New York, according to which the preamble of claim 1 has been drafted, discloses a computer system comprising a plurality of component computers or sliced computer modules, and these sliced computer modules construct a distributed processing system. Each of the sliced computer modules are operated at the same time, and if any of the sliced computer modules fails, the system will enter into degraded mode of operation.

US-A-4 354 217 discloses a computer system which comprises different types of circuits such as processors, memories, and the like, which are provided in the wafer scale integrated circuit. Each circuit in the wafer scale circuit is provided with power disconnect circuits in the form of fuses. During operation, failed circuits are irreversibly disconnected from a power line by the power disconnect circuits.

EP-A-0 184 657 discloses a multi computer system comprising computer cards, memory cards and I/O cards, wherein a computer card, a memory card and an I/O card connected to an identical local bus each compose a component computer. All of the component computers are operated at the same time.

### Summary of the Invention

The principal object of the present invention is to facilitate the additions and alterations of elemental devices which constitute a computer system, and to realize a computer system which has the functions and performance of enhanced hardware, namely, a computer system which evolves through the adaptation to the changing service environments, thereby flexibly coping with changes in the internal arrangement of the computer system.

This object is met by the invention as set out in claim 1.

The present invention for accomplishing the above including a plurality of elements of a similar nature which are prepared for each of a plurality of constituent devices (including at least the three constituent devices of a memory for storing programs, a processor unit input/output interface circuit, and a power source portion) which constitute a computer system. A signal wiring line and power distribution line portion are provided which, when the computer system is utilized, combines the elements selected from among the plurality of constituent devices, thereby constructing a computer (hereinbelow, called the "service computer" in order to facilitate the description). When an alteration is required in at least one of the plurality of constituent devices of the service computer, the whole computer is disengaged or is rendered unusable, a new service computer can be constructed by the combining of newly selected elements from among a plurality of other constituent devices not yet used.

The signal wiring line and power distribution line portion has a bus line which couples the similar elements in common in all of the constituent devices except for the power source portion. This also includes a bus line connection means for connecting such plurality of bus lines, a component power feed portion for supplying electric power from one of the corresponding plurality of power sources of the power source portion to the plurality of constituent devices which comprise the service computer, and power source connection means, provided in the component power feed portion, so as to connect the component power feed portion to the corresponding power source only when the service computer is constructed.

According to the present invention, in a case where the elemental device is to be altered due to a failure, a change of a function, or the like, the component computer is altered together with the pertinent elemental device. In this case, replacement or physical removal of the elemental device is not required, but rather the elemental device is disengaged or is rendered unusable, whereupon the new component computer is brought into an operating state within the same architecture. Therefore, disposal for the replacement of the elemental device or connections is not needed.

In order to cope with the change of the service environments of the computer system, the old component computer is disengaged, and the new component computer is enabled, whereby both hardware and software can be adapted to the environment for function and performance.

According to the computer system of the present invention, a plurality of elemental circuits are first prepared for each constituent device such as a processor and a memory. Depending upon the state of use, such as the occurrence of a failure or the requirement of the addition of a new function, an unnecessary and used elemental circuit is replaced by another valid elemental circuit, without the exchange of a chip or the like, so that the maintenance and functional growth of a computer can be performed economically and efficiently by handling the computer as being disposable.

In a chip of software built-in type, data and power is supplied by light and functions of the software is adaptive to environment. Thus, a computer system is realized, which can flexibly cope with variety of environments.

Furthermore, the computer systems according to the present invention as revealed by the embodiments have the following effects:
(1) Since the signal wiring and power distribution lines among constituents are made unitary in respective circuits, a computer system can be renewed without maintenance operations such as the attachment or detachment of any elemental device or new wiring.
(2) When an unused program is executed, each time the new program can be executed without the operations of the status management of programs, such as the registration of the new program, and the erasure of the old program, merely by storing the new program. Thus, the program management is simplified.
(3) Due to signal wiring and power distribution lines which utilize light, variable wiring is performed unlike fixed wiring, so that even the change of a wiring pattern can be flexibly coped with, and the available space for the wiring does not become insufficient.

### Brief Description of the Drawings

Fig. 1 is an architectural diagram of an embodiment of a computer system according to the present invention;
Fig. 2 is a perspective view of an embodiment of signal wiring in Fig. 1;
Fig. 3 and Fig. 4 are perspective views showing the constructions of constituent devices in Fig. 1;
Fig. 5 is a perspective view of signal wiring which utilizes light;
Fig. 6 is a perspective view of power distribution lines which utilize light;
Fig. 7 is a layout diagram of an embodiment of that memory of the computer system according to the present invention in which programs are disposable;
Fig. 8 is a perspective view of an embodiment of variable signal wiring in the computer system according to the present invention;
Fig. 9 is a perspective view of stacked constituent devices of Figs. 3 and 4;
Fig. 10 is a perspective view of signal wiring and power distribution line which utilize light;
Fig. 11 is a perspective view of the embodiment of the signal wiring of Fig. 8;
Fig. 12 is a cross-section of a portion of Fig. 8; and
Fig. 13 is a circuit diagram of an embodiment of the fuse circuit of Fig. 7.

### Description of the Preferred Embodiments

Now, the present invention will be described in detail in conjunction with the embodiments.

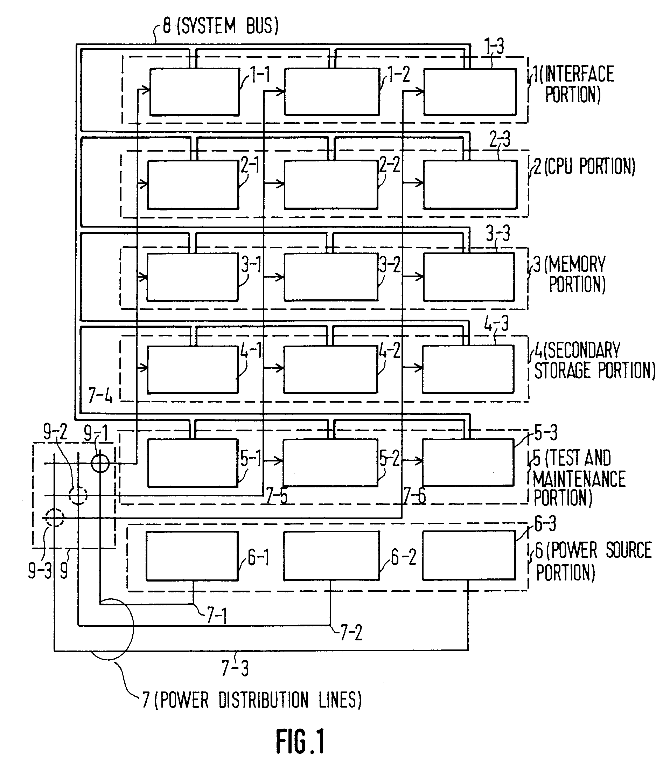

Fig. 1 shows the construction of an embodiment of a computer system according to the present invention. In Fig. 1, numerals 1, 2, 3, 4, 5 and 6 indicate an input/output interface circuit portion, a processor portion, a memory circuit portion, a secondary storage circuit portion, a test and maintenance tool circuit portion and a power source portion, respectively, which are a plurality of constituent devices constituting a computer system.

In each of the constituent devices, there are a plurality of circuits of the same sort (the functions capacities etc. of which need not always be identical). The elemental circuits of each of the constituent devices, except the power source portion 6, are connected in common by a system bus 8 which is signal transfer means for transferring signals. Power source wiring lines 7-1, 7-2 and 7-3 are laid from the plurality of elemental power sources 6-1, 6-2 and 6-3 of the power source device portion 6 to the matrix-shaped array of the plurality of elemental circuits through a switching matrix 9 in such a manner as to be independent of one another: For the sake of brevity, however, each power source wiring line 7 is indicated by a single line from the single power source 6-1, 6-2 or 6-3. A plurality of lines or a plurality of power sources are sometimes connected, depending upon the actual state of use.

The switching matrix 9 constitutes means for specifying a computer (a component computer) to actuate operation and also for disengaging a used component computer when it becomes unnecessary. By way of example, when the intersection point 9-1 of the switching matrix 9 between the column line 7-1 and a row line 7-4 is wired, electric power is supplied from the power source 6-1 to the elemental circuits of an interface circuit 1-1, a processor circuit 2-1, a memory 3-1, a secondary storage circuit 4-1 and a test and maintenance circuit 5-1. As a result, a component computer which consists of the elemental circuits 1-1, 2-1, 3-1, 4-1 and 5-1 is initiated into an operating state. The other elemental circuits are also connected by the common system buses 8, but are not supplied with electric power from the power sources, therefore they do not influence the afore-mentioned component computer.

In regard to this embodiment, in cases where any of the elemental circuits comprising the component computer has become unusable or where the power source has dissipated its electric power, or where a program is to be altered for the purpose of adding a new function, or where enlargement in a memory capacity is necessary, the elemental circuit which needs to be altered or changed is not disposed of, but rather the intersection point 9-1 of the switching portion is disconnected and another intersection point 9-2 is wired, whereby a new component computer configured of elements 1-2, 2-2, 3-2, 4-2 and 5-2 is initiated into an operating state, and the previously used component computer is disengaged.

In regard to the actual construction the embodiment, the computer system is suitably constructed on a single wafer provided the individual elemental circuits thereof are simple. For the convenience of the manufacture of the respective constituent devices, however, it is desirable to construct the constituent devices as layers in a multilevel fashion.

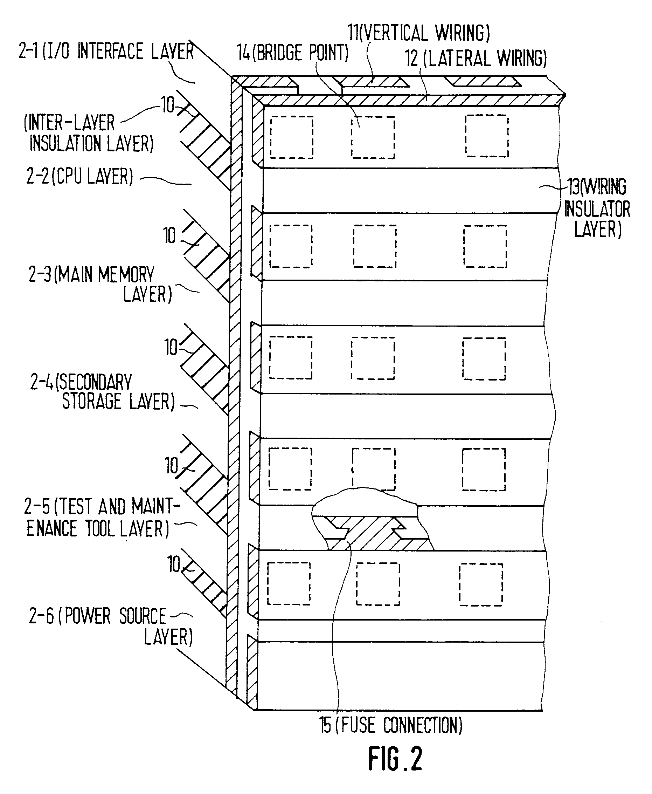

Fig. 2 is a perspective view showing the construction of an embodiment of the computer system according to the present invention. In the figure, an I/O interface layer 2-1, a CPU layer 2-2, a main memory layer 2-3, a secondary storage layer 2-4, a test and maintenance tool layer 2-5, and a power source layer 2-6 are such that the constituent devices 1 - 6 in Fig. 1 are constructed in the form of layers, which are stacked through inter-layer insulation layers 10.

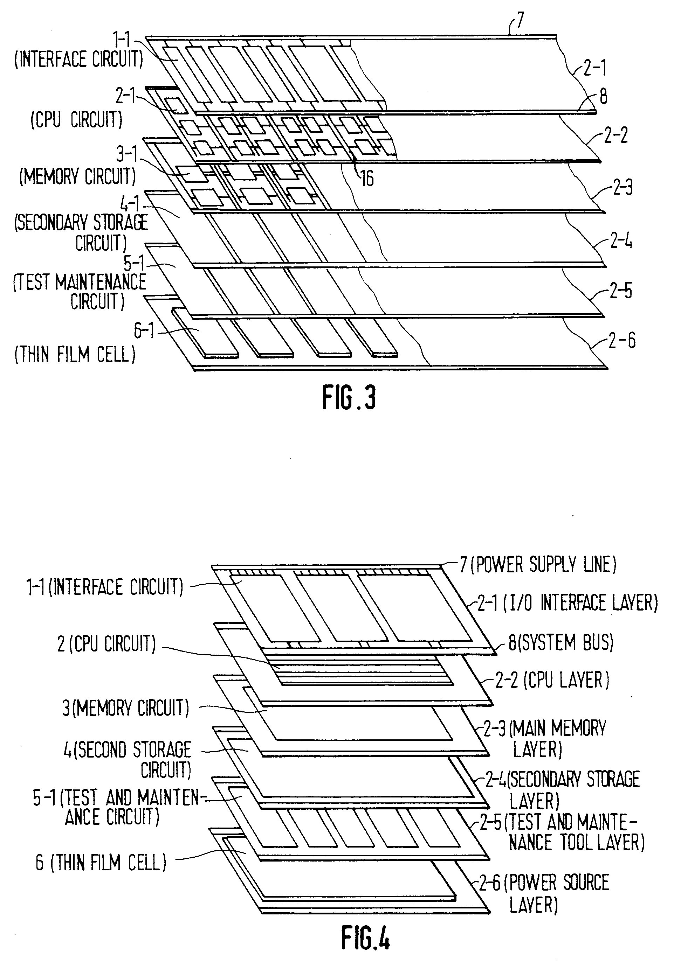

Fig. 3 is an exploded perspective view of the respective layers 2-1 thru 2-6, and shown an embodiment in which a plurality of component computers are recurrently formed in the planar direction of the layers and in which unit circuits within each layer are coupled by a bus.

On the I/O interface layer 2-1, interface circuits 1-1 are recurrently formed in a fixed pattern. On the CPU layer 2-2, CPU circuit 2-1 are successively formed in such a manner that they are coupled by an intra-layer networking bus 16. On the main memory layer 2-3, memory circuits 3-1 are successively formed in such a manner that they are coupled by an intra-layer networking bus 16. On the secondary storage layer 2-4, secondary storage circuits 4-1 are successively formed in such a manner that they are coupled by an intra-layer networking bus 16. On the test and maintenance tool layer 2-5, test and maintenance circuits 5-1 are successively formed in such a manner that they are coupled by an intra-layer networking bus 16. On the power source layer 2-6, thin-film cells 6-1 are recurrently formed in a fixed pattern.

In the above embodiment, the "recurrent pattern of the interface circuit 1-1" signifies one unit which consists of any of the interfaces of different specifications, for example, "RS 232C" and "Centronics." In the power source layer 2-6, one unit is similarly made up of any of the power sources whose electric power specifications such as supply voltages and amperes are different. Further, in the test and maintenance tool layer 2-5, one unit is made up of any of the tools whose test specifications and maintenance methods are different. In each of the remaining layers of the CPU layer 2-2, main memory layer 2-3 and secondary storage layer 2-4, a capability and a capacity form one unit. Regarding those patterns, each of these layers which are coupled with the layer, are proportional to the area and the performance of capacity.

According to the embodiment shown in Fig. 3, the performance and capacity of the computer system is available as is necessary and sufficient, and a computer resource corresponding to a software scale can be constructed. That is, hardware can be conformed to software in contrast to usual cases.

As illustrated in Fig. 3, the system buses 8 which are the means for the signal transmission among the layers, and the power source wiring lines 7, which are means for the power feed, are formed in the individual layers, and are respectively made unitary in the stacked layer state.

In Figure 2, vertical wiring lines 11 and lateral wiring lines 12 are arranged in a checkered pattern. Wiring insulation layer 13 is disposed for the purpose of insulating the vertical wiring lines 11 from each other, for insulating the lateral wiring lines 12 from each other, and for insulating the vertical wiring line 11 from the lateral wiring line 12. The wiring insulation layer fills up the vacant space of the checkered arrangement. Each bridge point 14 is a place where the vertical wiring line 11 and the lateral wiring line 12 intersect with the wiring insulation layer 13. When heat is applied to the bridge point 14, the corresponding part of the wiring insulation layer 13 is melted or destroyed to turn into a fuse connection 15. Because of the fuse connections 15, any desired layers can be wired for transmitting signals.

Fig. 4 is a perspective view showing the layer configuration of constituent devices in another embodiment of the computer system according to the present invention. The same functional portions as in the embodiment of Fig. 3 are assigned the same numerals. As illustrated in Fig. 4, the plurality of elemental circuits of the same sort need not be provided in all the constituent devices, but they may be provided in only the restricted constituent devices of which alterations, additions or changes are required. Also, in Fig. 4, a switching matrix shown in Fig. 1 is formed on a reverse side of the power source layer 2-6.

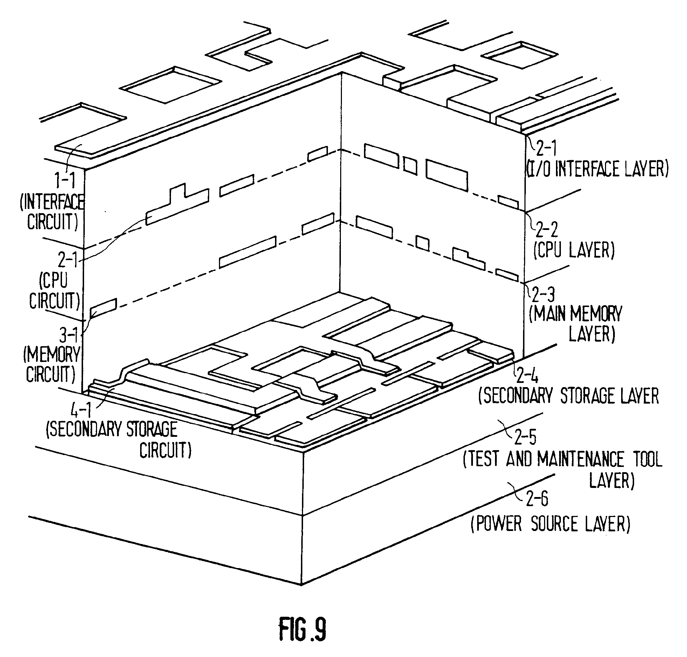

Fig. 9 shows a perspective view of stacked constituent devices of Figs. 3 and 4 and includes a partial cross section.

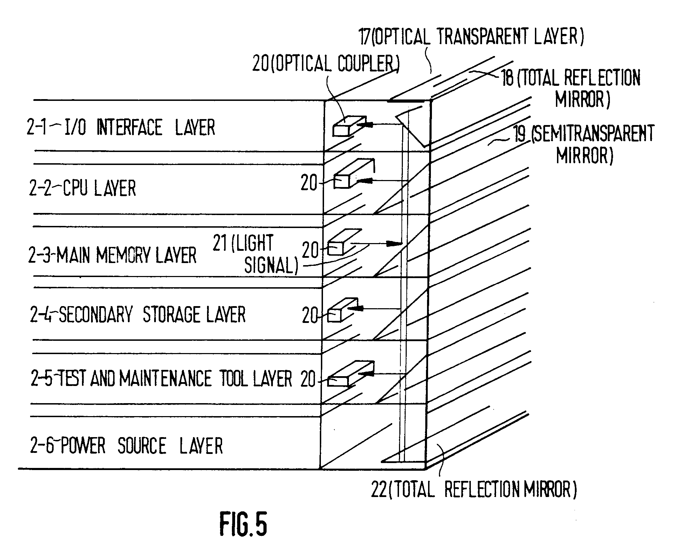

Fig. 5 shows an embodiment in which a system bus 8 for transferring signals among layers is constructed by utilizing space waves. Here, an optical transparent layer 17 is formed so as to contact the individual layers of a stacked layer structure, and light is transmitted within the optical transparent layer 17. The layers, except the power source layer 2-6, are furnished with optical couplers 20 and semitransparent mirrors 19, or a total reflection mirror is provided in the optical transparent layer 17 at positions which intersect the optic axes of the optical couplers 20. The total reflection mirror 18 is disposed at the power source layer 2-6 or I/O interface layer 2-1 which is the outermost layer of the stacked layer structure. The total reflection mirror 22 located at the bottom surface of the optical transparent layer 17 corresponds to the power source layer 2-6,and the total reflection mirror 18 located at the ceiling surface of the optical transparent layer 17 corresponds to the interface layer 2-1 and both are installed in order to reflect light. The semitransparent mirror 19 passes part of light therethrough, and reflects the other part of the light. The semitransparent mirrors 19 are disposed in the optical transparent layer 17 at positions which correspond respectively to the CPU layer 2-2, main memory layer 2-3, secondary storage layer 2-4, and test and maintenance tool layer 2-5. Regarding the paths of signal transmission by light in this embodiment, in the example of Fig. 5, light signal sent from the optical coupler 20 of the main memory layer 2-3, is reflected by the semitransparent mirror 19 corresponding to the main memory layer 2-3, and leads to the semitransparent mirror 19 of the CPU layer 2-2. The light transmitted leads to the I/O interface layer 2-1, and the transmitted light is thereafter reflected by the total reflection mirror 18. Part of the reflected light is reflected by the semitransparent mirror 19 of the I/O interface layer 2-1, to change its direction by 90°, and it is received by the optical coupler 20. The other part of the light is transmitted to reach both the secondary storage layer 2-4 and the test and maintenance tool layer 2-5 in the same way.

In Fig. 5, a signal selector connected with the optical coupler 20 may be provided for every layer. This selector includes a signal code table comprising a plurality of signal codes SC1, SC2,... A signal received as the light signal 21 has a signal code and a signal data. The light (optical) signal 21 converted to an electrical signal by the optical coupler 20 is inputted to the signal selector. The signal selector refers to the signal code table and decides if the inputted signal is available by comparing the signal code of the inputted signal with the signal codes SC1, SC2,... of the signal code table. If the inputted signal is decided to be available, that is, to be taken in, the signal data of the inputted signal is transferred to the layer to which the signal selector belongs. An optical coupler 20 transmitting the light signal produces a signal code corresponding to at least one desired layer to which a signal data is to be transferred so as to transmit the signal code with the signal data as the light signal.

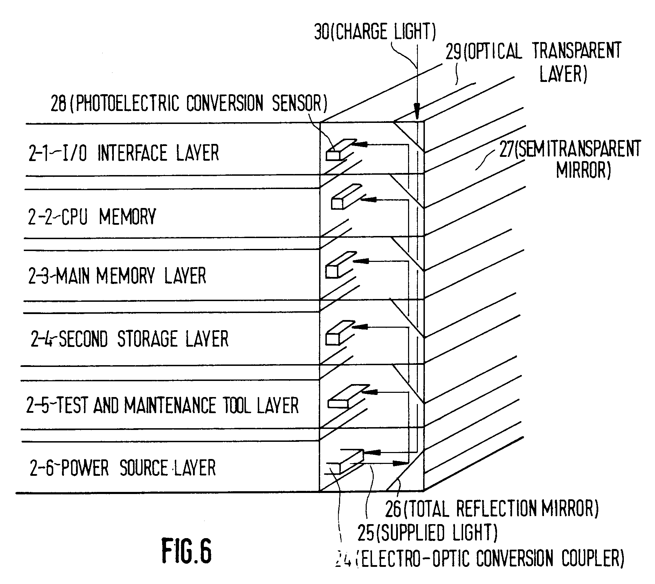

Fig. 6 is a perspective view of essential portions showing the construction of an embodiment which concerns the layout of the power source wiring 7 shown in Fig. 1, and in which electric power is supplied by light. Here, electric energy stored in a power source layer 2-6 is converted into light by an electro-optic conversion coupler 24, and the converted feed light 25 is reflected by a total reflection mirror 26 to reach a test and maintenance tool layer 2-5. Part of the light is reflected by a semitransparent mirror 27 and sent into the photoelectric conversion sensor 28 of the corresponding layer, and it is reconverted into electric energy, which is supplied into the layer. In the same way, the light is successively sent into a secondary storage layer 2-4, a main memory layer 2-3, a CPU layer 2-2 and an I/O interface layer 2-1, whereby the electric power is fed.

When the electro-optic conversion coupler 24 of the power source layer 6 receives charge light 30 from outside, it can convert the light into electric energy and store the electric energy. The component computer can be set for operation as needed and is selected and driven through the electro-optic conversion coupler corresponding to a component computer selected from among a plurality of computers constructed of the layers.

A system bus 8 shown in Fig. 5 and a power source wiring 7 shown in Fig. 6 are formed at respective sides of those shown in Figs. 3 and 4.

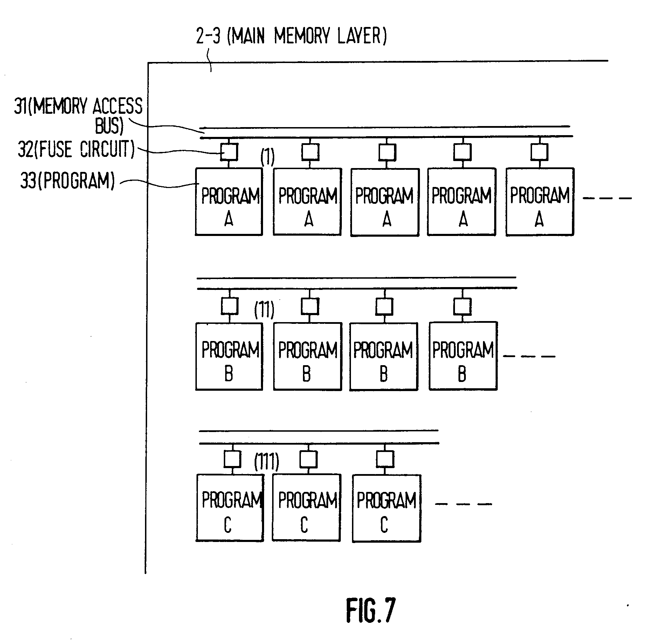

Fig. 7 shows the construction of a main memory device 3 in another embodiment of the computer system according to the present invention, and exemplifies the storage device where, each time a program has been executed, it becomes impossible to be executed again. A main memory layer 2-3 stores programs 33 therein which are accessible through memory access buses 31 as well as fuse circuits 32. The same programs 33 are stored every memory accessing bus 31. Here, when a signal is applied toward an accessed program 33 through the memory access bus 31, as well as the fuse circuit 32, after the execution of the program 33, signals from only the program 33 to the memory access bus 31 fail to flow due to the fuse of the circuit. Accordingly, the program 33 cannot be executed again after one time of execution, and the same program 33, at the right of the unexecutable program 33, as viewed in the figure, is subsequently accessed.

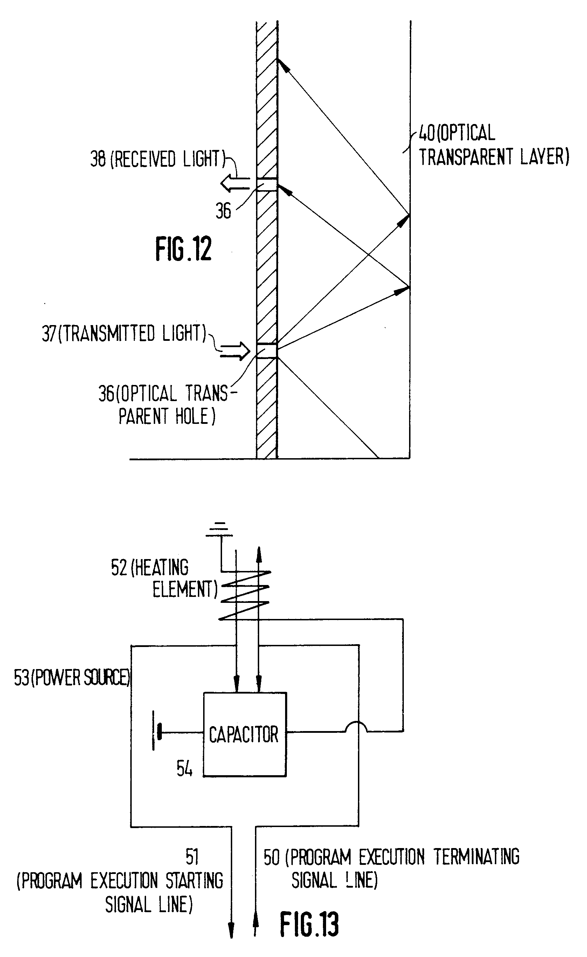

Fig. 13 shows a circuit diagram of an embodiment of the fuse circuit shown in Fig. 7. In Fig. 13, when a program execution start signal on a signal line 51 is applied to a capacitor 54, the capacitor 54 is charged by a power source. When a program execution termination signal on a signal line 50 is applied to the capacitor 54, it is discharged and a current flows to a heating element 52. Thus, the signal lines 50 and 51 are cut off by melting them. According to this embodiment, the plurality of identical programs are stored as patterns, so that initialization for the re-execution of the program is not required.

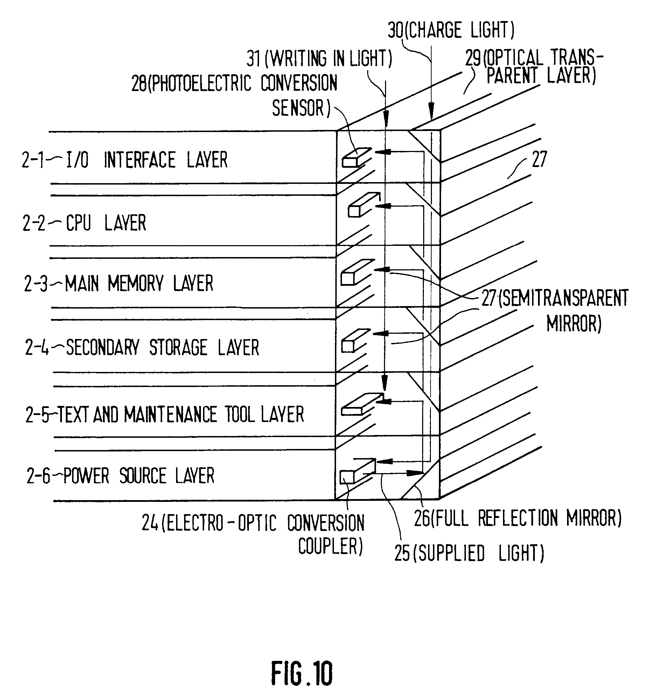

Fig. 10 shows a perspective view of signal wiring and power distribution line which utilize light. In Fig. 10, writing-in light is externally applied to the main storage layer 2-3 and the secondary storage layer 2-4. The writing-in light 31 is applied through semitransparent mirrors 27 to photoelectric conversion sensors 28 of the main storage layer 2-3 and the secondary storage layer 2-4. The light is converted to electric signal and stored in the storage of these layers.

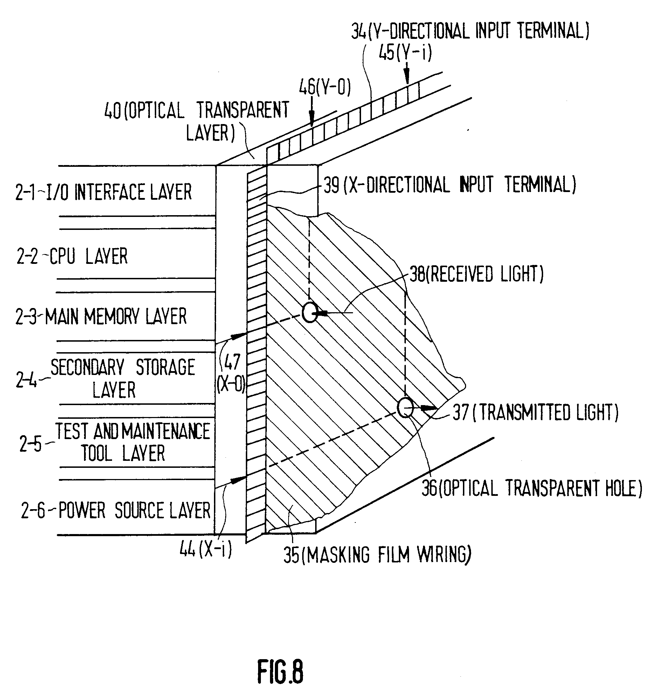

Fig. 8 shows the construction of an embodiment of the computer system according to the present invention. More particularly, it shows the construction in which the coupling for signal transfer among stacked constituent devices is effected only when required. The layers 2-1 thru 2-6 of a plurality of constituent devices are stacked with an optical transparent layer 40 formed in the vertical direction of the stacked layers, and a masking wiring film 35 is formed in this layer 40. The peripheral part of the masking wiring film 35 extends in the vertical direction thereof and forms an X-directional input terminal 39, while the peripheral part extending in the lateral direction forms a Y-directional input terminal 34. When the signals of an X-select input X-i 44, X-o 47 and a Y-select input Y-i 45, Y-o 46 are applied to the X-directional input terminal 39 and Y-directional input terminal 34 respectively, an optical transparent hole 36 is formed due to the electrical characteristics of the masking wiring film 35. Therefore, transmitted light 37 emergent from the optical transparent hole 36 enters another optical transparent hole 36 as received light 38. The transmitted light 37 scatters in the entire space lying within the optical transparent layer 40 and partitioned by the masking wiring film 35, and thereafter enters the optical transparent hole 36 as the received light. The optical transparent hole 36 is extinguished when the signals of the X-select input X-i and Y-select input Y-i are removed. That is, in the presence of the signals at both the X- and Y-select inputs, the optical transparent hole 36 is formed in the place of corresponding X- and Y-coordinates, and a transmission path for transferring light is established.

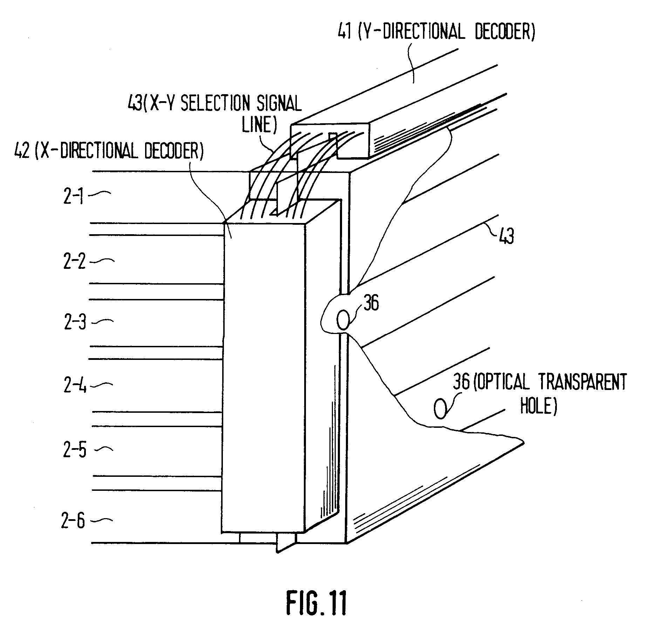

Fig. 11 shows a perspective view of the embodiment of the signal wiring of Fig. 8. Optical transparent holes 36 are formed by Y-directional 41 and X-directional 42 decoders to which signals on X-Y selection signal lines 43.

Fig. 12 shows a cross-section of a portion of Fig. 8 in which the transmitted light 37 is scattered in the optical transparent layer 40.

## Claims

1. A computer system comprising:
a plurality of processing devices (2);
a plurality of memory devices (3);
a plurality of interface devices (1);
a power source device (6);
a signal transfer means (8) for transferring signals among said processing devices, memory devices and said interface devices;
a plurality of component computers each including at least one of said processing devices, memory devices and interface devices;
characterized by
a plurality of power distribution means (7-4, 7-5, 7-6) provided to respective component computers for providing electric power to devices included in corresponding component computers; and
a switching means (9) selectively connecting said plurality of power distribution means (7-4, 7-5, 7-6) to said power source device (6) so that said component computers are selectively operated.

2. The computer system of claim 1, further comprising:
means for securing each of said plurality of processing devices, memory devices and interface devices in a generally planar construction forming a single layer, and
means for securing and interconnecting said devices in a multistage fashion.

3. The computer system of claim 2, further comprising:
means for storing a plurality of programs in said plurality of memory devices (3), and
means for controlling said signal transfer means (8) and said power distribution means (7) such that a unique one of said plurality of programs is executed upon each subsequent execution of the computer system.

4. The computer system of claim 2 or 3, wherein said signal transfer means (8) includes optical means (36) formed on a side surface of the multistage stacked layers and out of a masking wiring film (35) made of a substance whose transparency is at least one of selectively and reversibly controlled by electric characteristics, and wherein said optical means includes means (40) for transferring signals among said respective devices constructed into said multistage layers.

5. The computer system of claim 4, wherein the power distribution means includes means (24, 28) for supplying electric power such that the electric power of said power source device (2-6) is converted into light, and that the light is converted into the electric power by the devices other than said power source device.

## Patentansprüche

1. Computersystem mit:
mehreren Verarbeitungsvorrichtungen (2);
mehreren Speichervorrichtungen (3);
mehreren Schnittstellenvorrichtungen (1);
einer Stromquellenvorrichtung (6);
einer Signalübertragungseinrichtung (8), um Signale zwischen den Verarbeitungsvorrichtungen, Speichervorrichtungen und Schnittstellenvorrichtungen zu übertragen;
mehreren Komponentencomputern, die jeweils zumindest eine der Verarbeitungsvorrichtungen, Speichervorrichtungen und Schnittstellenvorrichtungen umfassen;
gekennzeichnet durch
mehrere Stromverteileinrichtungen (7-4, 7-5, 7-6), die jeweiligen Komponentencomputern zugeordnet sind, um elektrische Leistung an Vorrichtungen, die von den entsprechenden Komponentencomputern umfaßt sind, zu liefern; und
eine Schalteinrichtung (9), die mehrere Stromverteileinrichtungen (7-4, 7-5, 7-6) mit der Stromquellenvorrichtung (6) selektiv verbindet, so daß die Komponentencomputer selektiv betrieben werden.

2. Computersystem nach Anspruch 1, ferner umfassend:
Einrichtungen zur Anbringung jeder der Verarbeitungsvorrichtungen, Speichervorrichtungen und Schnittstellenvorrichtungen in einer im allgemeinen ebenen, eine einzelne Schicht bildenden Konstruktion, und
Einrichtungen zur Fixierung und Verbindung der Vorrichtungen untereinander in einer mehrstufigen Anordnung.

3. Computersystem nach Anspruch 2, ferner umfassend:
Einrichtungen zur Speicherung mehrerer Programme in den mehreren Speichervorrichtungen (3), und
Einrichtungen zur Ansteuerung der Signalübertragungseinrichtung (8) und der Stromverteileinrichtung (7), so daß ein bestimmtes der mehreren Programme bei jedem folgenden Ablauf des Computersystems ausgeführt wird.

4. Computersystem nach Anspruch 2 oder 3, wobei die Signalübertragungseinrichtung (8) eine optische Einrichtung (36) umfaßt, die auf einer Seitenfläche der mehrstufig gestapelten Schichten und aus einer Maskenverdrahtungslage (35) gebildet ist, die aus einer Substanz besteht, deren Transparenz selektiv und/oder reversibel durch elektrische Eigenschaften steuerbar ist, und wobei die optische Einrichtung eine Einrichtung (40) zur Übertragung von Signalen zwischen den in die mehrstufigen Schichten eingebauten Vorrichtungen umfaßt.

5. Computersystem nach Anspruch 4, wobei die Stromverteileinrichtung Einrichtungen (24, 28) zur Zuführung elektrischer Leistung umfaßt, so daß die elektrische Leistung der Leistungsquelleneinrichtung (2-6) in Licht umgewandelt wird, und daß das Licht mittels anderer Einrichtungen als der Stromquelleneinrichtung in elektrische Leistung umgewandelt wird.

## Revendications

1. Système informatique comprenant :
une pluralité de dispositifs de traitement (2);
une pluralité de dispositifs de mémoire (3);
une pluralité de dispositifs d'interface (1);
un dispositif formant source d'énergie (6);
des moyens de transfert de signaux (8) pour transférer des signaux entre lesdits dispositifs de traitement, lesdits dispositifs de mémoire et lesdits dispositifs d'interface;
une pluralité d'ordinateurs formant composants et comprenant chacun au moins l'un desdits dispositifs de traitement, desdits dispositifs de mémoire et desdits dispositifs d'interface;
caractérisé par
une pluralité de moyens de distribution d'énergie (7-4, 7-5, 7-6) prévus pour les ordinateurs respectifs formant composants, pour appliquer une énergie électrique à des dispositifs contenus dans des ordinateurs correspondants formant composants; et
des moyens de commutation (9) raccordant de façon sélective ladite pluralité de moyens de distribution d'énergie (7-4, 7-5, 7-6) audit dispositif formant source d'énergie (6), de sorte que lesdits ordinateurs formant composants fonctionnent de façon sélective.

2. Système informatique selon la revendication 1, comportant en outre :
des moyens pour fixer chacun de ladite pluralité de dispositifs de traitement, de dispositifs de mémoire et de dispositifs d'interface, dans une construction essentiellement plane formant une seule couche, et
des moyens pour fixer et interconnecter lesdits dispositifs selon une disposition à étages multiples.

3. Système informatique selon la revendication 2, comprenant en outre :
des moyens pour mémoriser une pluralité de programmes dans ladite pluralité de dispositifs de mémoire (3), et
des moyens pour commander lesdits moyens de transfert de signaux (8) et lesdits moyens de distribution d'énergie (7) de telle sorte qu'un programme unique parmi ladite pluralité de programmes est exécuté lors de chaque exécution ultérieure dans le système informatique.

4. Système informatique selon la revendication 2 ou 3, dans lequel lesdits moyens de transfert de signaux (8) comprennent des moyens optiques (36) formés sur une surface latérale des couches empilées selon des étages multiples et à l'extérieur d'une pellicule de câblage de masquage (35) réalisée en un matériau dont la transparence est commandée de façon sélective et/ou réversible au moyen de caractéristiques électriques, et dans lequel lesdits moyens optiques comprennent des moyens (40) pour transférer des signaux entre lesdits dispositifs respectifs formés dans lesdites couches à étages multiples.

5. Système informatique selon la revendication 4, dans lequel les moyens de distribution d'énergie comprennent des moyens (24,28) pour délivrer une énergie électrique de telle sorte que l'énergie électrique dudit dispositif formant source d'énergie (2-6) est convertie en lumière, et que la lumière est convertie en la puissance électrique par les dispositifs autres que ledit dispositif formant source d'énergie.
